# EUROPÄISCHE PATENTSCHRIFT

(11) **EP 2 132 547 B1**
(45) Veröffentlichungstag und Bekanntmachung des Hinweises auf die Patenterteilung: **22.06.2011**
(21) Anmeldenummer: 08717346.4
(22) Anmeldetag: 04.03.2008
(51) Int. Cl.: G01L 9/06

(54) **DRUCKSENSOR**
PRESSURE SENSOR
CAPTEUR DE PRESSION

(30) Priorität: 05.03.2007 DE 102007010913
(43) Veröffentlichungstag der Anmeldung: 16.12.2009
(73) Patentinhaber: Endress+Hauser GmbH+Co. KG, 79689 Maulburg (DE)
(72) Erfinder: GETMAN, Igor, 79539 Lörrach (DE); STOLZE, Dieter, 14469 Potsdam (DE); THAM, Anh Tuan, 10243 Berlin (DE)
(74) Vertreter: Andres, Angelika Maria
(86) Internationale Anmeldenummer: PCT/EP2008/052583
(87) Internationale Veröffentlichungsnummer: WO 2008/107427

(56) Entgegenhaltungen:
- JP-A- 59 228 141
- US-A1- 2005 274 191
- US-B1- 6 595 066
- SANDMAIER H: "LOW-PRESSURE SENSOR WITH BOSSED DIAPHRAGM" MECHATRONICS, PERGAMON PRESS, OXFORD, GB, Bd. 1, Nr. 4, 1. Januar 1991 (1991-01-01), Seiten 393-401, XP000249024 ISSN: 0957-4158
- MIN-HANG BAO ET AL: "MICROMACHINED BEAM-DIAPHRAGM STRUCTURE IMPROVES PERFORMANCES OF PRESSURE TRANSDUCER" SENSORS AND ACTUATORS A, ELSEVIER SEQUOIA S.A., LAUSANNE, CH, Bd. A21, Nr. 1 / 03, 1. Februar 1990 (1990-02-01), Seiten 137-141, XP000149573 ISSN: 0924-4247
- MERLOS A ET AL: "Optimized technology for the fabrication of piezoresistive pressure sensors; Optimized technology for piezoresistive pressure sensors" JOURNAL OF MICROMECHANICS & MICROENGINEERING, INSTITUTE OF PHYSICS PUBLISHING, BRISTOL, GB, Bd. 10, Nr. 2, 1. Juni 2000 (2000-06-01), Seiten 204-208, XP020068556 ISSN: 0960-1317 in der Anmeldung erwähnt

## Beschreibung

Die Erfindung betrifft einen Drucksensor.

Drucksensoren dienen zur Erfassung von Drücken und werden beispielsweise in Druckmessgeräten eingesetzt, die in der industriellen Messtechnik verwendeten werden.

In der Druckmesstechnik werden gerne so genannte Halbleiter-Sensoren, z.B. Silizium-Chips mit eindotierten piezoresistiven Widerstandselementen, als Drucksensoren eingesetzt. Derartige Halbleitersensoren umfassen eine auf einem Träger angeordnete Messmembran, deren eine Seite im Messbetrieb einem zu messenden Druck ausgesetzt wird. Drucksensor-Chips sind in der Regel sehr empfindlich und werden deshalb nicht direkt einem Medium ausgesetzt, dessen Druck aufgenommen werden soll. Stattdessen werden mit einer Flüssigkeit gefüllte Druckmittler vorgeschaltet. Ein auf die Messmembran einwirkender Druck bewirkt eine druckabhängige Auslenkung der Messmembran, die mittels der eindotierten Widerstandselemente erfasst, und in ein elektrisches Signal umgewandelt wird, dass dann einer weiteren Verarbeitung und/oder Auswertung zur Verfügung steht.

Halbleiter-Sensoren werden heute regelmäßig auf Siliziumbasis, z.B. unter Verwendung von Silicon-on-Insulator (SOI) Technologie hergestellt. Dabei werden bevorzugt BESOI-Wafer (Bonded and etchback silicon on insulator) als Ausgangsmaterial verwendet. BESOI-Wafer werden mittels Siliziumdirektbonden hergestellt. Hierzu werden zwei oxidierte Silizium-Wafer gegeneinander ausgerichtet und unter Druck und hoher Temperatur gebonded. Hierdurch entsteht ein dreischichtiger Wafer, bei dem sich zwischen zwei Siliziumschichten eine Oxidschicht befindet. Die unter der Bezeichnung BOX (buried oxide layer) bekannte vergrabene Oxidschicht hat eine Dicke von wenigen nm bis zu wenigen µm. Dieser Verbund wird von einer Seite abgedünnt und poliert. Die abgedünnte polierte Seite bildet im weiteren Verlauf die Aktivschicht. Die Aktivschicht kann wenige µm dick sein und wird in der englischsprachigen Fachwelt z.B. als device wafer oder als silicon overlayer (SOL) bezeichnet. Die Dicke der Aktivschicht kann mit heutigen Herstellungsverfahren bereits sehr genau und gleichmäßig und mit hoher Reproduzierbarkeit hergestellt werden.

Ein wesentlicher Vorteil der Verwendung von BESOI-Wafern für die Herstellung von Drucksensoren besteht darin, dass die vergrabene Oxidschicht (BOX) einen zuverlässigen Ätzstopp bildet. Dies wird vor allem für die Herstellung beweglicher Elektroden von kapazitiven Drucksensoren ausgenutzt.

Es sind aber auch Verfahren bekannt, bei denen BESOI-Wafer für die Herstellung von piezoresistiven Drucksensoren eingesetzt werden.

Ein solches Verfahren ist in dem im Jahr 2000 im Journal of Micromechanical Engineering, Band 10, Seite 204 bis 208, erschienenen Artikel: 'Optimized technology for the fabrication of piezoresistive pressure sensors', von A. Merlos, J. Santander, M.D. Alvares und F. Campabadal beschrieben. Dort wurde gezeigt, dass man mit BESOI-Wafern Sensorchips produzieren kann, die eine genau definierte und über den gesamten Bereich der Membran konstante Membrandicke aufweisen. Insb. können piezoresistive Sensoren mit sehr dünnen Membranen mit geringsten Dickentoleranzen, von weniger als 1 µm, hergestellt werden. Hierzu wird in die der Aktivschicht gegenüberliegende Siliziumschicht ein Ausnehmung eingeätzt, über die die Membran freigelegt wird. Dabei dient die vergrabene Oxidschicht als Ätzstopp. Der nach dem Ätzvorgang verbleibende äußere Rand der Siliziumschicht begrenzt die Ausnehmung außenseitlich und bildet einen Träger für die durch die Ausnehmung freigelegte Membran. Nach diesem Ätzvorgang wird der als Ätzstopp dienende Bereich der Oxidschicht durch einen weiteren Ätzvorgang entfernt.

Die Empfindlichkeit piezoresistiver Drucksensoren ist reziprok abhängig von der Dicke der Membran. Je dünner die Membran ist, umso empfindlicher ist der Sensor. Leider steigt aber auch die Nichtlinearität der Sensoren mit dünner werdenden Membranen an. Das über die eindotierten Widerstände abgenommene elektrische Messsignal steigt im Idealfall linear mit dem auf die Membran einwirkenden Druck an. Je dünner die Membran ist, umso stärker sind die Abweichungen von diesem gewünschten linearen Verlauf. Dies führt insb. bei Drucksensoren zur Messung geringer Drücke, die hierzu dünne Membranen benötigen, zu Messfehlern bzw. zu einem hohen Aufwand für die Kompensation dieser Messfehler.

Eine Lösung dieses Problems besteht darin, die Membran mit einem biegesteifen Zentrum auszustatten. Ein solches biegesteifes Zentrum wird beispielsweise auf der von der Aktivschicht abgewandten Rückseite der Membran durch Siliziumvolumenbearbeitung erzeugt, indem dort mittig ein Siliziumstempel angeordnet wird. Die Bauhöhe des Stempels ist dabei geringfügig geringer als die Bauhöhe des den Stempel außenseitlich umgebenden Membranträgers. Hierdurch ist gewährleistet, dass der Stempel ausschließlich von der Membran getragen wird, und insb. nicht auf einer Halterung, auf die der Membranträger aufgebracht wird, aufliegt. Stempel und Membranträger sind voneinander durch einen ringzylindrischen den Stempel umgebenden Spalt getrennt, durch den ein äußerer Rand der Membran freigelegt ist. Hierdurch ist ein höheres Verhältnis zwischen Empfindlichkeit und Nichtlinearität erzielbar. Allerdings führt ein biegesteifes Zentrum dazu, dass die Membran dadurch im ganzen steifer und damit unempfindlicher wird. Die Erhöhung des Verhältnisses geht damit einher mit einer Reduzierung der Empfindlichkeit des Drucksensors, die insb. bei der Messung geringer Drücke nachteilig ist. Oft muss hier ein Kompromiss akzeptiert werden.

In der US-A 2005/0274191 ist ein Verfahren beschrieben, mit dem sich die Empfindlichkeit piezoresistiver Drucksensoren erhöhen lässt. Hierzu wird ein Teil der Aktivschicht in der unmittelbaren Umgebung der eindotierten piezoresistiven Elemente derart weggeätzt, dass die Elemente von einem Graben umgeben sind. Die Tiefe der Gräben entspricht dabei in etwa der Dicke der eindotierten Widerstände. Die Gräben wirken als Spannungskonzentratoren und bewirken damit eine Erhöhung der Empfindlichkeit der Sensoren, ohne dass die Membran vergrößert werden muss bzw. deren Dicke großflächig reduziert werden muss.

Dieses Verfahren bietet jedoch den Nachteil, dass auf der im Messbetrieb dem zu messenden Druck ausgesetzten Vorderseite der Membran temperaturabhängige Spannungszustände auftreten können, die durch die unterschiedlichen thermischen Ausdehnungskoeffizienten von Silizium und der eingegrabenen Oxidschicht und die unterschiedlichen Geometrien der beiden Membranseiten zurück zu führen sind. Diese Spannungszustände sind temperaturabhängig und führen zu Messfehlern. Dieser Effekt tritt besonders stark auf, da diese thermischen Spannungszustände in der unmittelbaren Umgebung der eindosierten piezoresistiven Elemente auftreten und diese Elemente sehr empfindlich auf Spannungen reagieren.

Hermann Sandmaier offenbart in Mechatronics Vol. 1, No. 4, pp. 393-401, 1991 einen piezoresistiven Drucksensor, welcher eine Messmembran mit einem biegesteifen Zentrum aufweist. In die Membran ist um das biegesteife Zentrum, ein Graben zur Spannungskonzentration eingeätzt, wobei der Graben mit piezoresistiven Widerstandselementen einer Wheatstone-Brücke fluchtet.

Es ist eine Aufgabe der Erfindung einen piezoresistiven Drucksensor in BESOI Technologie anzugeben, der insb. für die Messung geringer Drücke geeignet ist und einen geringen Linearitätsfehler aufweist.

Hierzu besteht die Erfindung in einem aus einem eine erste und eine zweite Siliziumschicht und eine dazwischen angeordnete Oxidschicht aufweisenden BESOI Wafer gefertigten Drucksensor,

- der eine aus der ersten Siliziumschicht des BESOI Wafers gebildete

Aktivschicht aufweist, in der piezoresistive Elemente eindotiert sind, und

- der einen aus der zweiten Siliziumschicht des BESOI Wafers gebildeten

Membranträger aufweist,

-- der eine Ausnehmung in der zweiten Siliziumschicht außenseitlich umgibt,

über die ein eine Membran bildender Bereich der Aktivschicht und der

damit verbundenen Oxidschicht frei gelegt ist,

- bei dem in einem äußeren Rand des durch die

Ausnehmung frei gelegten Bereichs der Oxidschicht eine den Bereich

umgebende Nut vorgesehen ist.

Gemäß einer Weiterbildung ist die Nut eine Ausnehmung in der Oxidschicht, die im Querschnitt eine abgerundete Geometrie aufweist.

Gemäß einer weiteren Weiterbildung sind die eindotierten piezoresistiven Elemente in der Membran an Orten auf der Membranoberseite angeordnet, an denen auf der gegenüberliegenden Membranunterseite die Nut verläuft.

Gemäß einer weiteren Weiterbildung weist die durch einen Bereich der Aktivschicht und den damit verbundenen Bereich der Oxidschicht gebildete Membran eine quadratische Grundfläche auf, und die piezoresistiven Elemente sind in den Ecken dieses Bereichs der Aktivschicht angeordnet.

Weiter umfasst die Erfindung ein Verfahren zur Herstellung eines erfindungsgemäßen Drucksensors aus einem BESOI Wafer,

der eine erste und eine zweite Siliziumschicht und eine dazwischen angeordnete Oxidschicht aufweist, bei dem

- aus der ersten Siliziumschicht eine Aktivschicht gebildet wird,

in die piezoresistive Elemente eindotiert werden,

- aus der zweiten Siliziumschicht ein Membranträger gebildet wird,

-- der eine Ausnehmung in der zweiten Siliziumschicht außenseitlich umgibt,

über die ein eine Membran bildender Bereich der Aktivschicht und der

damit verbundenen Oxidschicht frei gelegt ist, indem das im Bereich der

Ausnehmung vorhandene Silizium mittels eines Ätzverfahrens entfernt

wird, wobei die Oxidschicht als Ätzstopp verwendet wird, und

- in einem äußeren Rand des durch die Ausnehmung frei gelegten Bereichs

der Oxidschicht eine den Bereich umgebende Nut mittels eines isotropen

Ätzverfahrens eingeätzt wird.

Gemäß einer Weiterbildung des Verfahrens wird die Nut hergestellt, indem

- mittels Fotolithographie eine Fotomaske aufgebracht wird,

- die Nut mittels einer reinen Plasmaätzung mit chemisch reaktiven

Gasen, insb. mit CF₄ + O₂ oder SF₆ + O₂, in die Oxidschicht eingeätzt wird,

und

- die Fotomaske entfernt wird.

Gemäß einer ersten alternativen Weiterbildung des Verfahrens wird die Nut hergestellt, indem

- mittels Fotolithographie eine Fotomaske aufgebracht wird,

- die Nut mittels eines isotropen nasschemischen Prozesses, insb. mittels

einer Ätzlösung aus Flusssäure, Salpetersäure und Essigsäure mit

unterschiedlichen Ätzraten für Silizium und Siliziumoxid, in die Oxidschicht

eingeätzt wird, und

- die Fotomaske entfernt wird.

Gemäß einer zweiten alternativen Weiterbildung des Verfahrens wird die Nut hergestellt, indem

- mittels Fotolithographie eine Fotomaske aufgebracht wird,

- die Nut mittels einer Kombination aus einem isotropen nasschemischen

Ätzvorgang, insb. unter Verwendung von mit Ammoniumfluorid

gepufferter Flusssäure (BHF), und einem isotropen trockenchemischen

Ätzvorgang, insb. einem Deep Reactive Ion Etching (DRIE) in die

Oxidschicht eingeätzt wird, und

- die Fotomaske entfernt wird.

Der erfindungsgemäße Drucksensor bietet den Vorteil, dass er bei den zur Messung geringer Drücke, insb. bei Drücken von weniger als 100 mbar, erforderlichen geringen Membrandicken in der Größenordnung von 20 µm aufgrund der auf der Membranunterseite angeordneten Oxidschicht einen geringen Linearitätsfehler aufweist. Dabei wirkt sich die Oxidschicht ähnlich wie ein biegesteifes Zentrum auf die Linearität aus, ohne dass hierdurch die Empfindlichkeit des Sensors wesentlich reduziert wird. Der Grund hierfür besteht darin, dass die Oxidschicht im Vergleich zur Membran sehr dünn ist, und damit die Steifheit der Membran nur unwesentlich erhöht. Demgegenüber führen biegesteife Zentren mit an die Membran angeformten Stempeln, deren Bauhöhe typischer Weise ein Vielfaches der Membrandicke beträgt, zu einer deutlichen Reduktion der Empfindlichkeit.

Ein weiterer Vorteil der Erfindung besteht darin, dass die Empfindlichkeit der erfindungsgemäßen Drucksensoren durch die den freiliegenden Bereich der Oxidschicht umgebende Nut deutlich erhöht wird, indem durch einen einwirkenden Druck bewirkte mechanische Spannungen durch die Nut an den Orten der eindotierten piezoresistiven Elemente konzentriert werden.

Die Erfindung erlaubt es daher sehr geringe Drücke von weniger als 100 mbar mit hoher Messgenauigkeit zu messen.

Die Erfindung und deren Vorteile werden nun anhand der Figuren der Zeichnung, in denen zwei Ausführungsbeispiele dargestellt sind, näher erläutert. Gleiche Elemente sind in den Figuren mit den gleichen Bezugszeichen versehen.

Fig. 1 zeigt einen Schnitt durch einen BESOI-Wafer;

Fig. 2 zeigt einen Schnitt durch einen BESOI-Wafer gemäß Fig. 1, bei dem

aus dessen erster Siliziumschicht eine Aktivschicht gebildet

wurde;

Fig. 3 zeigt einen Schnitt durch einen BESOI-Wafer gemäß Fig. 1, bei dem

aus dessen zweiter Siliziumschicht ein Membranträger gebildet wurde;

Fig. 4 zeigt einen Schnitt durch erfindungsgemäßen Drucksensor.

Fig. 5 zeigt eine Ansicht der Membranrückseite einer ersten Variante eines

erfindungsgemäßen Drucksensors;

Fig. 6 zeigt eine Ansicht der Membranrückseite einer zweiten Variante eines

erfindungsgemäßen Drucksensors; und

Fig. 7 zeigt Linearitätsfehler von drei Drucksensoren mit unterschiedlicher Oxidschichtdicke im Bereich der Membran in Abhängigkeit von einem auf den jeweiligen Drucksensor einwirkenden Druck.

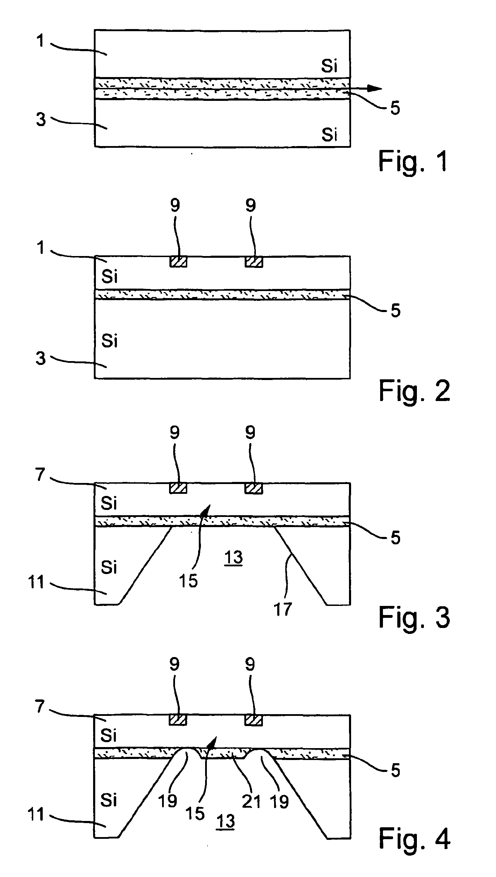

Der erfindungsgemäße Drucksensor ist ein Halbleiter-Sensor auf Siliziumbasis, der unter Verwendung von Silicon-on-Insulator (SOI) Technologie hergestellt wird. Als Ausgangsmaterial dient dabei ein handelsüblicher BESOI-Wafer (Bonded and etchback silicon on insulator). BESOI-Wafer werden beispielsweise aus zwei oxidierten Silizium-Wafern hergestellt, die gegeneinander ausgerichtet und unter Druck und hoher Temperatur gebonded werden. Hierdurch entsteht ein in Fig. 1 dargestellter dreischichtiger Wafer, der eine erste und eine zweite Siliziumschicht 1, 3 aufweist. Zwischen der ersten und der zweiten Siliziumschicht 1, 3 befindet sich eine Oxidschicht 5. Die unter der Bezeichnung BOX (buried oxide layer) bekannte vergrabene Oxidschicht 5 hat eine Dicke von wenigen nm bis zu wenigen µm.

Dieser Verbund wird von einer Seite abgedünnt und poliert. Die abgedünnte polierte Seite bildet im weiteren Verlauf die Aktivschicht 7. Die Aktivschicht kann wenige µm dick sein und wird in der englischsprachigen Fachwelt z.B. als device wafer oder als silicon overlayer (SOL) bezeichnet. Die Dicke der Aktivschicht kann mit heutigen Herstellungsverfahren bereits sehr genau und gleichmäßig und mit hoher Reproduzierbarkeit hergestellt werden.

In die Aktivschicht 7 werden, wie auch bei herkömmlichen Drucksensoren, piezoresistive Elemente 9 eindotiert. Entsprechende Herstellverfahren sind aus der Halbleitertechnologie bekannt, und daher hier nicht näher erläutert. Fig. 2 zeigt einen Schnitt durch einen Wafer mit einer Aktivschicht 7 mit eindotierten piezoresistiven Elementen 9. Die piezoresistiven Elemente 9 sind vorzugsweise Widerstände, die einen darauf einwirkenden Druck bzw. eine darauf einwirkende mechanische Spannung in ein elektrisches Signal umwandeln, das über entsprechende in der Aktivschicht 7 vorgesehene, in den Figuren nicht dargestellte Anschlüsse einer weiteren Verarbeitung und/oder Auswertung zuführbar ist. Dabei können die Elemente 9 als Einzelelemente angeschlossen werden, oder zu einer Brückenschaltung zusammengefasst werden.

Aus der zweiten Siliziumschicht 3 wird ein Membranträger 11 gebildet. Dies ist in Fig. 3 gezeigt. Der Membranträger 11 ist ein fest mit einem äußeren Rand der Oxidschicht 5 verbundener Rahmen, der eine Ausnehmung 13 in der zweiten Siliziumschicht 3 außenseitlich umgibt. Die Ausnehmung 13 legt einen durch den Rahmen begrenzten Bereich der Aktivschicht 7 und der damit verbundenen Oxidschicht 5 frei, der dadurch eine Membran 15 bildet. Vorzugsweise weist die Ausnehmung 13 eine in Richtung der Oxidschicht 5 sich konisch verjüngende innere Mantelfläche 17 auf. Diese Formgebung bietet den Vorteil, einer erhöhten mechanischen Stabilität des Drucksensors.

Ein auf eine von der Oxidschicht 5 abgewandte Oberseite der Membran 15 einwirkender Druck führt zu einer druckabhängigen Durchbiegung der Membran 15, der mittels der in der Oberseite in der Aktivschicht 7 eindotierten piezoresistiven Elemente 9 erfasst und in ein druckabhängiges elektrisches Signal umgewandelt wird.

Die Ausnehmung 13 wird durch ein Ätzverfahren erzeugt, mit dem das im Bereich der Ausnehmung 13 vorhandene Silizium entfernt wird. Dabei dient die vergrabene Oxidschicht 5 als Ätzstopp. Der nach dem Ätzvorgang verbleibende äußere Rand der Siliziumschicht 3 begrenzt die Ausnehmung 13 außenseitlich und bildet den Membranträger 11 für die durch die Ausnehmung 13 freigelegte Membran 15. Diese Vorgehensweise bietet den Vorteil, dass die hiermit hergestellten Membranen 15 eine genau definierte und über den gesamten Bereich der Membran konstante Membrandicke aufweisen. Insb. können sehr dünne Membranen 15 mit geringsten Dickentoleranzen, von weniger als 1 µm, hergestellt werden.

Erfindungsgemäß ist in einem äußeren Rand des durch die Ausnehmung 13 frei gelegten Bereichs der Oxidschicht 5 eine den Bereich umgebende Nut 19 vorgesehen. Fig. 4 zeigt einen erfindungsgemäßen Drucksensor mit der Nut 19. Der von der Nut 19 eingeschlossene Bereich 21 der Oxidschicht 5 ist im Vergleich zu der Dicke der Membran 15 sehr dünn, und weist eine über dessen gesamte Fläche sehr homogene Dicke auf. Die Dicke der Oxidschicht 5 beträgt beispielsweise 1 bis 2 µm. Die Dicke der Membran 15 beträgt beispielsweise 20 µm.

Vorzugsweise sind die in die Membran 15 eindotierten piezoresistiven Elemente 9 an Orten auf der Membranoberseite angeordnet, an denen auf der gegenüberliegenden Membranunterseite die Nut 19 verläuft. Dies führt zu einer höheren Empfindlichkeit des Drucksensors, da sich durch einen auf die Membranoberseite einwirkenden Druck bewirkte mechanische Spannungen aufgrund der Nut 15 an den Orten besonders konzentrieren, an denen sich die piezoresistiven Elemente 9 befinden. Ein wesentlicher Vorteil der Anordnung der Nut 19 auf der Membranunterseite besteht darin, dass die Membranoberseite in der Umgebung der eindotierten piezoresistiven Elemente 9 homogen gestaltet ist. Hierdurch werden die gewünschten druckabhängigen mechanischen Spannungen im Bereich der piezoresistiven Elemente 9 verstärkt, ohne dass gegebenenfalls durch die Nut 19 bedingte thermische Spannungen in unmittelbarer Nähe der Elemente 9 auftreten. Der Grund hierfür besteht darin, dass sich die Nut 19 auf der Membranunterseite befindet, und damit von den auf der Membranoberseite befindlichen piezoresistiven Elementen 9 beabstandet ist. Dies führt zu einem gegenüber dem Stand der Technik, bei dem Spannungskonzentratoren auf der Membranoberseite in unmittelbarer Umgebung der piezoresistiven Elemente angeordnet sind, deutlich verringerten temperaturabhängigen Messfehler.

Der Effekt der Konzentration der druckbedingten mechanischen Spannungen ist besonders groß, wenn die durch einen Bereich der Aktivschicht 3 und den damit verbundenen Bereich der Oxidschicht 5 gebildete Membran 15 eine rechteckige oder eine quadratische Grundfläche aufweist, und die piezoresistiven Elemente 9 in den Ecken dieses Bereichs der Aktivschicht 5 angeordnet sind. Die Erfindung ist aber natürlich auch in Verbindung mit Membranen mit anders gestalteter Grundfläche einsetzbar. Ein Beispiel sind Membranen mit runder Grundfläche. Auch in Verbindung anderen Geometrien der Membrangrundfläche bewirkt die Oxidschicht eine deutliche Reduzierung des Linearitätsfehlers.

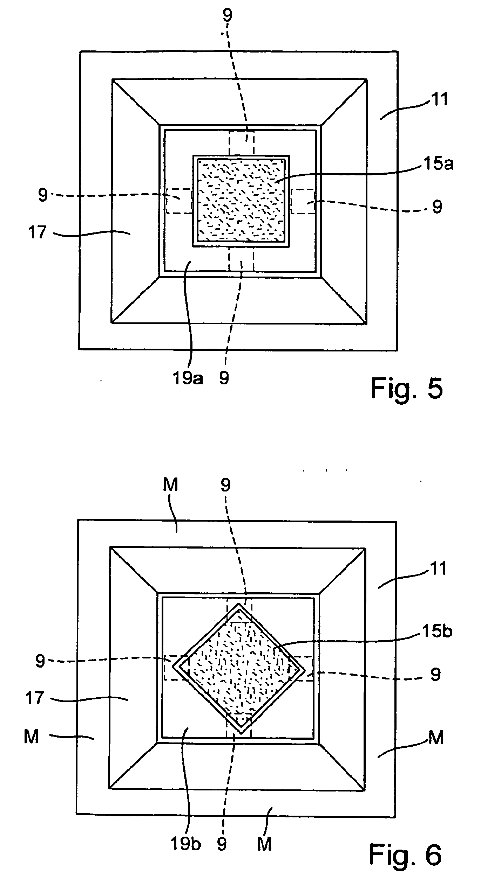

In den Figuren 5 und 6 sind hierzu zwei Ausführungsbeispiele dargestellt. Beide Figuren zeigen jeweils eine Ansicht der von der Aktivschicht 5 abgewandten Unterseite des jeweiligen Drucksensors.

Bei dem in Fig. 5 dargestellten Ausführungsbeispiel ist eine Membran 15a mit quadratischer Grundfläche dargestellt, die von einem quadratischen Membranträger 11 mit einer im Querschnitt quadratischen Ausnehmung 13 eingefasst ist. Die Membran 15a ist derart angeordnet, dass deren Außenseiten parallel zu den Außenseiten des Membranträgers 11 verlaufen. Sie wird von einer in die Oxidschicht 5 eingeätzten Nut 19a umgeben, deren Grundfläche die Form eines die Membran 15a umgebenden quadratischen Rahmens aufweist. Die Position der piezoresistiven Elemente 9 auf der gegenüberliegenden Membranoberseite ist gestrichelt eingezeichnet. Sie befinden sich an Orten auf der Membranoberseite, an denen auf der gegenüberliegenden Membranunterseite die Nut 19a verläuft. In dem in Fig. 5 dargestellten Ausführungsbeispiel weist die Nut 19a vier identische gerade Abschnitte auf, die zusammen einen quadratischen Rahmen bilden. Die vier piezoresisitiven Elemente 9 befinden sich auf der Membranoberseite an Orten an denen sich auf der gegenüberliegenden Membranunterseite jeweils die Mitte des darunter verlaufenden Abschnitts der Nut 19a befindet.

Bei dem in Fig. 6 dargestellten Ausführungsbeispiel weist die Membran 15b ebenfalls eine quadratische Grundfläche auf, die von dem quadratischen Membranträger 11 mit einer im Querschnitt quadratischen Ausnehmung 13 eingefasst ist. Im Unterschied zu dem in Fig. 5 dargestellten Ausführungsbeispiel ist die Membran 15b derart angeordnet, dass die Ecken der quadratischen Grundfläche der Membran 15b jeweils zur Mitte M der jeweiligen Außenseiten des Membranträgers 11 weisen. Membranträger 11 und Ausnehmung 13 sind in beiden Ausführungsbeispielen identisch. Die in der Oxidschicht 5 verlaufende Nut 19b weist hier eine an die Ausrichtung der Membran 15b angepasste Grundfläche auf. Auch hier sind vier piezoresistive Elemente 9 auf der Membranoberseite vorgesehen, und auf der gegenüberliegenden Unterseite verläuft unter den piezoresistiven Elementen 9 die Nut 19b. Im Unterschied zu dem in Fig. 5 dargestellten Ausführungsbeispiel sind die piezoresistiven Elemente 9 hier in den vier Ecken der Membran 15b angeordnet. Diese Anordnung führt zu einer besonders ausgeprägten Konzentration der druckbedingten mechanischen Spannungen auf die Orte an denen sich die piezoresistiven Elemente 9 befinden, und damit zu einer besonders großen Erhöhung der Empfindlichkeit des Drucksensors.

Vorzugsweise ist die Nut 19 eine Ausnehmung in der Oxidschicht 5, die im Querschnitt eine abgerundete Geometrie aufweist. In dem in Fig. 4 dargestellten Ausführungsbeispiel weist die Nut 19 einen kreissegmentförmigen Querschnitt auf. Diese abgerundete Form der Nut 19 bietet den Vorteil, dass sich hierdurch die Berstfestigkeit des Drucksensors erhöht.

Bei der Herstellung des erfindungsgemäßen Drucksensors wird die im Querschnitt abgerundete Geometrie der Nut 19 vorzugsweise durch die Verwendung eines isotropen Ätzverfahrens erzeugt. Eine isotrope Ätzung ist mittels trockenchemischer Ätzverfahren erzielbar. Ein Beispiel für einen trockenchemischen Ätzprozess ist das Boschverfahren. Aufgrund der geringen für die Nut 19 erforderlichen Ätztiefe von vorzugsweise 1 bis 2 µm können aber auch sehr viel weniger aufwendige und kostengünstigere nasschemische Ätzverfahren eingesetzt werden.

Vorzugsweise erfolgt die Ätzung der Nut 19 mittels einer reinen Plasmaätzung Dabei wird in einem ersten Arbeitsgang mittels Fotolithographie eine Fotomaske aufgebracht. Anschließend wird die Nut 19 mittels einer reinen Plasmaätzung mit chemisch reaktiven Gasen, insb. mit CF₄ + O₂ oder SF₆ + O₂, in die Oxidschicht 5 eingeätzt. Dieses Verfahren bietet den Vorteil, dass sich die Geometrie der Nut 19 nahezu frei gestalten lässt, und die Ätzselektivität zwischen Silizium und Siliziumoxid sehr groß ist. Abschließend wird die Fotomaske wieder entfernt.

Alternativ hierzu kann die Nut 19 gemäß einem anderen erfindungsgemäßen Verfahren erzeugt werden, bei dem in einem ersten Arbeitsgang mittels Fotolithographie eine Fotomaske aufgebracht. Anschließend wird die Nut 19 mittels eines isotropen nasschemischen Prozesses, insb. mittels einer Ätzlösung aus Flusssäure, Salpetersäure und Essigsäure mit unterschiedlichen Ätzraten für Silizium und Siliziumoxid, in die Oxidschicht 5 eingeätzt. Abschließend wird die Fotomaske wieder entfernt.

Eine weitere Alternative bietet ein Verfahren, bei dem mittels Fotolithographie eine Fotomaske aufgebracht wird, und die Nut 19 mittels einer Kombination aus einem isotropen nasschemischen und einem isotropen trockenchemischen Ätzvorgang in die Oxidschicht 5 eingeätzt wird. Der nasschemische Ätzvorgang kann beispielsweise unter Verwendung von mit Ammoniumfluorid gepufferter Flusssäure (BHF) ausgeführt werden. Für den trockenchemischen Ätzvorgang kann beispielsweise ein Verfahren, wie das Deep Reactive Ion Etching (DRIE) verwendet werden. Bei diesem Verfahren wird ein hoch reaktives Gas, z.B. SF₆, in einen Reaktor eingeleitet, in dem sich der Drucksensor befindet. Durch Erzeugen eines energiereichen Hochfrequenzplasmas und Beschleunigung der Ionen in einem elektrischen Feld wird eine isotrope chemische und eine physikalische Ätzreaktion ausgelöst. Abschließend wird auch hier die Fotomaske entfernt.

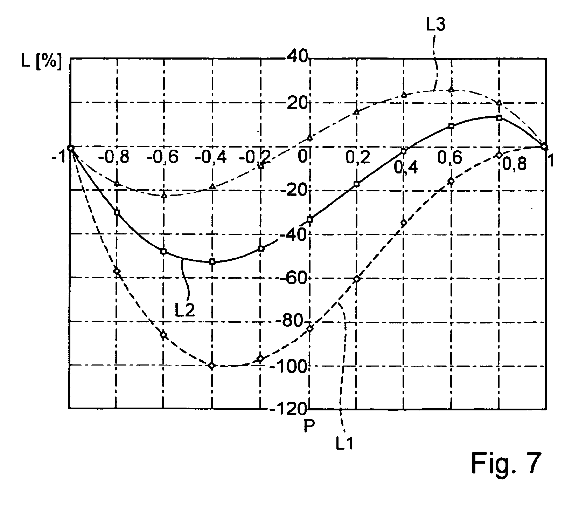

Während die Oxidschicht 5 bei herkömmlichen Drucksensoren im Bereich der Membran 15 vollständig entfernt wird, wird bei dem erfindungsgemäßen Drucksensor und bei dessen Herstellverfahren der von der Nut 19 eingefasste Bereich 21 der Oxidschicht 5 bewusst erhalten. Dieser Bereich 21 bewirkt eine deutliche Reduzierung des Linearitätsfehlers L des Drucksensors. Dies ist nachfolgend anhand von Finite-Elemente Berechnungen für drei verschiedene Drucksensoren dargestellt. Fig. 7 zeigt die relativen Linearitätsfehler L1, L2, L3 in % für die drei Drucksensoren in Abhängigkeit von einem darauf einwirkenden auf einen über den Messbereich des Drucksensors auf -1 bis 1 normierten Druck p. Alle drei Drucksensoren sind bis auf die Dicke Oxidschicht 5 im Bereich der Membran 15 identisch aufgebaut, und weisen eine Membrandicke von 20 µm auf. Den Berechnungen wurde die in den Figuren 4 und 6 dargestellte Bauform zugrunde gelegt.

Der erste Drucksensor weist im Bereich der Membran 15 keine Oxidschicht auf. Der Verlauf des für diesen Drucksensor berechneten Linearitätsfehler L1 ist in Fig. 7 durch rautenförmige Messpunkte dargestellt.

Bei dem zweiten Drucksensor wurde der von der Nut 19 eingefasste Bereich 21 der Oxidschicht 5 bewusst erhalten, und weist eine Dicke von 1 µm auf. Der Verlauf des für diesen Drucksensor berechneten Linearitätsfehler L2 ist in Fig. 7 durch quadratische Messpunkte dargestellt.

Bei dem dritten Drucksensor wurde der von der Nut 19 eingefasste Bereich 21 der Oxidschicht 5 ebenfalls bewusst erhalten, und weist eine Dicke von 2 µm auf. Der Verlauf des für diesen Drucksensor berechneten Linearitätsfehler L3 ist in Fig. 7 durch dreieckige Messpunkte dargestellt.

Ein Vergleich der Verläufe der Linearitätsfehler L der drei Drucksensoren, ergibt dass bereits bei einer Oxidschichtdicke von 1 µm eine deutliche Reduzierung des Linearitätsfehlers eintritt. Eine Erhöhung der Oxidschichtdicke auf 2 µm führt zu einer weiteren Reduzierung. Zugleich bewirkt die auf der Membranunterseite vorgesehene Nut 19 eine Erhöhung der Empfindlichkeit des Drucksensors, da die Nut 19 eine Konzentrierung der druckabhängigen mechanischen Spannungen auf die piezoresistiven Elemente 9 bewirkt.

Erfindungsgemäß wird damit zugleich eine Erhöhung der Empfindlichkeit und eine Reduzierung des Linearitätsfehlers bewirkt.

**Tabelle 1**

| | |
|---|---|
| 1 | erste Siliziumschicht |
| 3 | zweite Siliziumschicht |
| 5 | Oxidschicht |
| 7 | Aktivschicht |
| 9 | piezoresistive Elemente |
| 11 | Membranträger |
| 13 | Ausnehmung |
| 15 | Membran |
| 17 | Mantelfläche |
| 19 | Nut |
| 21 | Bereich der Oxidschicht |

## Patentansprüche

1. Drucksensor, welcher aus einem BESOI Wafer gefertigt ist,
wobei der BESOI Wafer eine erste und eine zweite Siliziumschicht (1, 3) und eine dazwischen angeordnete Oxidschicht (5) aufweist,
wobei der Drucksensor eine aus der ersten Siliziumschicht (1) des BESOI Wafers gebildete Aktivschicht (7) aufweist, in der piezoresistive Elemente (9) eindotiert sind, und
wobei der Drucksensor einen aus der zweiten Siliziumschicht (3) des BESOI Wafers gebildeten Membranträger (11) aufweist,
wobei der Membranträger eine Ausnehmung (13) in der zweiten Siliziumschicht (3) außenseitlich umgibt, über die ein eine Membran (15) bildender Bereich der Aktivschicht (7) und der damit verbundenen Oxidschicht (5) frei gelegt ist,
**dadurch gekennzeichnet dass:**
bei dem in einem äußeren Rand des durch die Ausnehmung (13) frei gelegten Bereichs (21) der Oxidschicht (5) eine den Bereich (21) umgebende Nut (19) vorgesehen ist.

2. Drucksensor nach Anspruch 1, bei dem die Nut (19) eine Ausnehmung in der Oxidschicht (5) ist, die im Querschnitt eine abgerundete Geometrie aufweist.

3. Drucksensor nach Anspruch 1, bei dem die eindotierten piezoresistiven Elemente (9) in der Membran (15) an Orten auf der Membranoberseite angeordnet sind, an denen auf der gegenüberliegenden Membranunterseite die Nut (19) verläuft.

4. Drucksensor nach Anspruch 1, bei dem die durch einen Bereich der Aktivschicht (7) und den damit verbundenen Bereich (21) der Oxidschicht (5) gebildete Membran (15) eine quadratische Grundfläche aufweist, und die piezoresistiven Elemente (9) in den Ecken dieses Bereichs der Aktivschicht (7) angeordnet sind.

5. Verfahren zur Herstellung eines Drucksensors aus einem BESOI Wafer, der eine erste und eine zweite Siliziumschicht (1, 3) und eine dazwischen angeordnete Oxidschicht (5) aufweist, bei dem
- aus der ersten Siliziumschicht (1) eine Aktivschicht (7) gebildet wird, in die piezoresistive Elemente (9) eindotiert werden,
- aus der zweiten Siliziumschicht (3) ein Membranträger (11) gebildet wird,
-- der eine Ausnehmung (13) in der zweiten Siliziumschicht (3) außenseitlich umgibt, über die ein eine Membran (15) bildender Bereich der Aktivschicht (7) und der damit verbundenen Oxidschicht (5) frei gelegt ist, indem das im Bereich der Ausnehmung (13) vorhandene Silizium mittels eines Ätzverfahrens entfernt wird, wobei die Oxidschicht (5) als Ätzstopp verwendet wird, und
- in einem äußeren Rand des durch die Ausnehmung (13) frei gelegten Bereichs (21) der Oxidschicht (5) eine den Bereich (21) umgebende Nut (19) mittels eines isotropen Ätzverfahrens eingeätzt wird.

6. Verfahren zur Herstellung eines Drucksensors nach Anspruch 5,
bei dem die Nut (19) hergestellt wird, indem
- mittels Fotolithographie eine Fotomaske aufgebracht wird,
- die Nut (19) mittels einer reinen Plasmaätzung mit chemisch reaktiven Gasen, insb. mit CF₄ + O₂ oder SF₆ + O₂, in die Oxidschicht (5) eingeätzt wird, und
- die Fotomaske entfernt wird.

7. Verfahren zur Herstellung eines Drucksensors nach Anspruch 5,
bei dem die Nut (19) hergestellt wird, indem
- mittels Fotolithographie eine Fotomaske aufgebracht wird,
- die Nut (19) mittels eines isotropen nasschemischen Prozesses, insb. mittels einer Ätzlösung aus Flusssäure, Salpetersäure und Essigsäure mit unterschiedlichen Ätzraten für Silizium und Siliziumoxid, in die Oxidschicht (5) eingeätzt wird, und
- die Fotomaske entfernt wird.

8. Verfahren zur Herstellung eines Drucksensor nach Anspruch 5,
bei dem die Nut (19) hergestellt wird, indem
- mittels Fotolithographie eine Fotomaske aufgebracht wird,
- die Nut (19) mittels einer Kombination aus einem isotropen nasschemischen Ätzvorgang, insb. unter Verwendung von mit Ammoniumfluorid gepufferter Flusssäure (BHF), und einem isotropen trockenchemischen Ätzvorgang, insb. einem Deep Reactive Ion Etching (DRIE), in die Oxidschicht (5) eingeätzt wird, und
- die Fotomaske entfernt wird.

## Claims

1. Pressure sensor which is made from a BESOI wafer,
where the BESOI wafer has a first and second silicon layer (1, 3) and an intermediate oxide layer (5),
where the pressure sensor has an active layer (7) formed from the first silicon layer (1) of the BESOI wafer in which piezoresistive elements (9) are doped, and
where the pressure sensor has a membrane support (11) formed from the second silicon layer (3) of the BESOI wafer,
where the membrane support surrounds a recess (13) in the second silicon layer (3) on the outside via which an area of the active layer (7) forming a membrane (15) and the oxide layer (5) connected to it are exposed,
**characterized in that:**
in an outer edge of the area (21) of the oxide layer (5) which is exposed by the recess (13), a groove (19) is provided which surrounds the area (21).

2. Pressure sensor as per Claim 1, where the groove (19) is a recess in the oxide layer (5) which has a rounded-off cross-section.

3. Pressure sensor as per Claim 1, where the doped piezoresistive elements (9) in the membrane (15) are arranged in areas of the upper side of the membrane along which the groove (19) runs on the opposite under side of the membrane.

4. Pressure sensor as per Claim 1, where the membrane (15) formed by an area of the active layer (7) and the area (21) of the oxide layer (5) connected to this has a square surface area and the piezoresistive elements (9) are arranged in the corners of this area of the active layer (7).

5. Process for producing a pressure sensor from a BESOI wafer that has a first and second silicon layer (1, 3) and an intermediate oxide layer (5), where
- an active layer (7), in which the piezoresistive elements (9) are doped, is formed from the first silicon layer (1)
- a membrane support (11) is formed from the second silicone layer (3)
-- which surrounds a recess (13) in the second silicone layer (3) on the outside via which an area of the active layer (7) forming a membrane (15) and the oxide layer (5) connected to it is exposed by removing the silicon in the area of the recess (13) using an etching process, where the oxide layer (5) serves to stop the etching, and
- in an outer edge of the area (21) of the oxide layer (5) exposed by the recess (13), a groove (19) surrounding the area (21) is etched in using isotropic etching.

6. Process for producing a pressure sensor as per Claim 5 where the groove (19) is created by
- applying a photo mask using photolithography
- etching the groove (19) into the oxide layer (5) using pure plasma etching with chemically reactive gases, particularly CF₄ + O₂ or SF₆ + O₂
- removing the photo mask.

7. Process for producing a pressure sensor as per Claim 5, where the groove (19) is created by
- applying a photo mask using photolithography
- etching the groove (19) into the oxide layer (5) using an isotropic wet-chemical process, particularly an etching solution of hydrofluoric acid, nitric acid and acetic acid with different etching rates for silicon and silicon oxide
- removing the photo mask.

8. Process for producing a pressure sensor as per Claim 5, where the groove (19) is created by
- applying a photo mask using photolithography
- etching the groove (19) into the oxide layer (5) using a combination of an isotropic wet- chemical etching process, particularly hydrofluoric acid buffered with ammonium fluoride (BHF), and an isotropic dry-chemical etching process, particularly deep reactive ion etching (DRIE)
- removing the photo mask.

## Revendications

1. Capteur de pression, lequel est fabriqué à partir d'une plaquette de silicium BESOI ("Bond and Etch-back Silicon on Insulator"),
la plaquette de silicium BESOI présentant une première et une deuxième couche de silicium (1, 3) et une couche d'oxydation intercalée entre elles,
le capteur de pression présentant, formée à partir de la première couche de silicium (1) de la plaquette de silicium BESOI, une couche active, dans laquelle sont dopés des éléments piézorésistifs (9), et
le capteur de pression présentant un support de membrane (11) formé à partir de la deuxième couche de silicium (3) de la plaquette de silicium BESOI,
le support de membrane entourant à l'extérieur un évidement (13) dans la deuxième couche de silicium (3), évidement à travers lequel est mise à nu une zone - formée par une membrane (15) - de la couche active (7) et de la couche d'oxydation (5) ainsi reliée,
**caractérisé en ce**
**que**, pour un bord extérieur de la zone (21) mise à nu par l'évidement (13) de la couche d'oxydation (5) est prévue une rainure (19) entourant la zone (21).

2. Capteur de pression selon la revendication 1, pour lequel la rainure (19) est un évidement dans la couche d'oxydation (5), lequel présente une section de géométrie arrondie.

3. Capteur de pression selon la revendication 1, pour lequel les éléments piézorésistifs (9) dopés sont disposés dans la membrane (15), en des endroits sur la partie supérieure de la membrane, au niveau desquels s'étend la rainure (19) sur la partie inférieure opposée de la membrane.

4. Capteur de pression selon la revendication 1, pour lequel la membrane (15) formée par une zone de la couche active (7) et de la zone (21) ainsi reliée de la couche d'oxydation (5) présente une surface de base quadratique, et les éléments piézorésistifs (9) sont disposés dans les angles de cette zone de la couche active (7).

5. Procédé destiné à la fabrication d'un capteur de pression à partir d'une plaquette de silicium BESOI, qui présente une première et une deuxième couche de silicium (1, 3) et une couche d'oxydation (5) intercalée entre elles, couche d'oxydation pour laquelle
- est formée, à partir de la première couche de silicium (1) une couche active (7), dans laquelle sont dopés des éléments piézorésistifs (9),
- est formée, à partir de la deuxième couche de silicium (3), un support de membrane (11).
-- qui entoure à l'extérieur un évidement (13) dans la deuxième couche de silicium (3), à travers laquelle est mise à nu une zone - formée par une membrane (15) - de la couche active (7) et de la couche d'oxydation (5) ainsi reliée, dans laquelle est éliminé dans la zone de l'évidement (13) le silicium présent au moyen d'un procédé de gravure, la couche d'oxydation (5) étant utilisée comme arrêt de la gravure, et
- dans un bord extérieur de la zone (21) mise à nu par l'évidement (13) de la couche d'oxydation (5) est gravé, au moyen d'un procédé de gravure isotrope, une rainure (19) entourant la zone (21).

6. Procédé destiné à la fabrication d'un capteur de pression selon la revendication 5, pour lequel la rainure (19) est fabriquée en ce
- qu'elle est appliquée par photolithographie d'un masque photo,
- que la rainure (19) est gravée dans la couche d'oxydation (5) au moyen d'un procédé exclusif de gravure au plasma avec des gaz chimiquement réactifs, notamment avec du CF₄ + O₂ ou SF₆ + O₂, et
- que le masque photo est retiré.

7. Procédé destiné à la fabrication d'un capteur de pression selon la revendication 5, pour lequel la rainure (19) est fabriquée en ce
- qu'elle est appliquée par photolithographie d'un masque photo,
- que la rainure (19) est gravée dans la couche d'oxydation (5) au moyen d'un processus à bain chimique isotrope, notamment au moyen d'une solution de gravure composée d' acide fluorhydrique, d'acide azotique et d'acide acétique, avec différents taux de gravure pour le silicium et l'oxyde de silicium, et
- que le masque photo est retiré.

8. Procédé destiné à la fabrication d'un capteur de pression selon la revendication 5, pour lequel la rainure (19) est fabriquée en ce
- qu'elle est appliquée par photolithographie d'un masque photo,
- que la rainure (19) est gravée dans la couche d'oxydation (5) au moyen d'une combinaison constituée d'un procédé de gravure à bain chimique isotrope, en utilisant notamment de l'acide fluorhydrique tamponné par du fluorure d'ammonium (BHF), et d'un procédé de gravure chimique sec isotrope, notamment une gravure ionique réactive profonde (DRIE - "Deep Reactive Ion Etching"), et
- que le masque photo est retiré.
